# FASCICULE DE BREVET EUROPEEN

(11) **EP 1 044 939 B1**
(45) Date de publication et mention de la délivrance du brevet: **17.08.2011**
(21) Numéro de dépôt: 99201119.7
(22) Date de dépôt: 13.04.1999
(51) Int. Cl.: C04B 16/06

(54) **Produits façonnés en fibres-ciment et fibres de renforcement pour de tels produits et procédé de traitement de telles fibres**
Geformte Faserzementgegenstände und Fasern für die Verstärkung derselben und Verfahren zur Behandlung von solchen Fasern
Shaped fibrous cement products and reinforcement fibers for such products and method for treating such fibers

(43) Date de publication de la demande: 18.10.2000
(73) Titulaire: REDCO S.A., 1880 Kapelle-op-den-Bos. (BE)
(72) Inventeur: Vidts, Dirk, 9600 Ronse (BE); de Lhoneux, Benoît, 1367 Gerompont (BE)
(74) Mandataire: Vandeberg, Marie-Paule L.G.

(56) Documents cités:
- EP-A- 0 225 036
- EP-A- 0 228 365
- EP-A- 0 310 100
- US-A- 4 310 478
- US-A- 4 404 314

## Description

La présente invention concerne un procédé de traitement de fibres de polypropylène pour le renforcement de produits façonnés en fibres-ciment, ainsi que les produits en fibres-ciment renforcés par ces fibres.

On réalise en fibres-ciment des produits solides façonnés les plus divers tels que, entre autres, des éléments de toiture et de façade tels que des ardoises, des plaques planes ou ondulées, des tubes et des réservoirs de stockage.

Ces produits solides façonnés sont fabriqués au départ d'une suspension aqueuse à prise hydraulique comportant des liants hydrauliques, des fibres de renforcement et éventuellement des charges. Cette suspension aqueuse est mélangée afin d'obtenir une distribution en substance uniforme des composants. La suspension est alors égouttée. Le produit frais ainsi obtenu peut ensuite être façonné, par exemple en forme de plaque plane, plaque ondulée ou en forme de tube. Par la suite, on laisse durcir le produit frais façonné dans des conditions atmosphériques ou bien encore dans des conditions de pression, de température et d'humidité spécifiques.

Le procédé de fabrication le plus répandu est le procédé Hatschek, dont la technologie, appliquée à l'origine à l'amiante-ciment, est décrite exhaustivement dans l'ouvrage "Asbestzement" de Harald Klos (Springer Verlag, 1967). D'autres procédés de fabrication sont, par exemple, les procédés Magnani, Mazza, Flow-on, d'extrusion et d'injection.

Le procédé Hatschek est basé sur l'utilisation de machines d'égouttage à tamis cylindrique. Dans ce procédé, un mat provenant d'une suspension diluée d'amiante et de ciment contenue dans un cuvier est transféré à un feutre, par l'intermédiaire d'un égouttoir cylindrique, et est ensuite enroulé jusqu'à l'épaisseur requise à l'aide de cylindres de formage. Pour la fabrication de feuilles ondulées, la feuille d'amiante-ciment formée sur le cylindre de formage est tranchée et détachée de ce cylindre après que l'épaisseur souhaitée a été atteinte. Cette feuille est ensuite façonnée et mise à durcir entre des formes en métal ondulé huilé.

Pour certaines applications il s'avère utile de comprimer le produit frais après sa mise en forme mais avant son durcissement (post-compression). On fait ainsi la distinction entre les produits façonnés en fibres-ciment non comprimés et les produits façonnés en fibres-ciment comprimés. Les produits façonnés en fibres-ciment comprimés ont été comprimés entre leur mise en forme et leur durcissement, sous une pression égale ou supérieure à 4,9 MPa (50 kgf/cm²). Habituellement, ces produits façonnés en fibres-ciment comprimés ont été soumis à l'état frais à des pressions entre 9,8 MPa et 24,5 MPa (entre 100 et 250 kgf/cm²).

L'amiante présente tant des propriétés de renforcement dues à sa résistance à la traction propre que des qualités de mise en oeuvre en relation avec l'excellente aptitude à la dispersion dans une suspension aqueuse de ciment. Pendant le stade d'égouttage, en raison des bonnes propriétés de filtration et de la bonne affinité pour le ciment, les fibres d'amiante peuvent retenir les fines particules en suspension du mélange composite en cours de façonnage. Dans le produit final hydraté, la haute résistance en traction combinée avec le module d'élasticité élevé et le faible allongement à la rupture contribuent à conférer aux produits manufacturés en amiante-ciment leur haute résistance en flexion connue.

Toutefois, l'amiante est devenu un composant indésirable pour des raisons tenant à l'environnement et à la santé et des efforts importants ont été consacrés à des tentatives de le remplacer.

Il est dès lors souhaitable d'utiliser de nouvelles fibres comme agents de renforcement et aussi comme auxiliaires de mise en oeuvre à utiliser avec les liants hydrauliques, par exemple pour le renforcement du ciment.

On n'a découvert aucune fibre naturelle ou synthétique présentant toutes les propriétés des fibres d'amiante. La résistance aux alcalis dans les solutions saturées d'hydroxyde de calcium est un critère particulier auquel doivent répondre les fibres de renforcement.

Il est encore important que les fibres puissent être dispersées aisément dans une suspension aqueuse diluée de ciment et restent aussi dispersées uniformément lors de l'apport d'autres additifs lorsque ces fibres doivent être mises en oeuvre par des techniques d'égouttage pour donner des produits en fibres-ciment. La bonne dispersion des fibres est importante à la fois pour qu'elles ne forment pas d'agglomérats et que la densité de fibres soit homogène dans le produit en fibres-ciment fini, mais aussi pour que les fibres ne s'orientent pas dans une direction commune.

En effet, si les fibres adoptaient une direction préférentielle, le produit en fibres-ciment aurait alors une résistance différente selon la direction de la force de rupture.

La littérature contient déjà d'innombrables publications à propos de l'utilisation de diverses fibres organiques et inorganiques naturelles ou synthétiques. Les fibres faites de cellulose, de polyamide, de polyester, de polyacrylonitrile, de polypropylène et de poly(alcool vinylique), entre autres, ont déjà fait l'objet d'investigations pour le renforcement du ciment. De même, on connaît des travaux sur des fibres faites de verre, d'acier, d'aramide et de carbone. Parmi toutes ces fibres, aucune n'a jusqu'à présent toutes les propriétés requises, spécialement pour le ciment.

Par exemple, le verre a une faible stabilité chimique, l'acier manifeste de la corrosion et a une densité trop élevée, le carbone est trop cassant, adhère mal et est de prix élevé, la cellulose a une durabilité insuffisante, et le polyéthylène et le polypropylène ordinaire ont une résistance en traction insuffisante.

Parmi les fibres de renforcement actuellement utilisées, les fibres de polyacrylonitrile (PAN) et d'alcool polyvinylique (PVA) sont généralement préférées. Isolément ou en combinaison, ces fibres permettent de procurer un produit façonné en fibres-ciment ayant une résistance à la traction élevée en combinaison avec une ductilité acceptable. Malheureusement, les fibres de PAN et de PVA sont coûteuses et augmentent considérablement le prix de revient des produits en fibres-ciment les contenant.

Les fibres de polypropylène, ont une excellente résistance aux alcalis, même à des températures pouvant aller jusque 110° C. Ce sont des fibres durables et peu coûteuses. Cependant, il est généralement affirmé que les fibres de polypropylène sont techniquement insuffisantes lorsqu'il s'agit de renforcer des matériaux dont la matrice à base de ciment est relativement cassante.

On a déjà cherché à améliorer les propriétés des fibres de polypropylène notamment par l'incorporation d'additifs dans la masse des fibres. Le document JP 6-219797 de Daiwabo Create décrit des fibres de polypropylène bicomposantes contenant dans leur partie périphérique du carbonate de calcium. Dans GB-2.030.891, des particules dissemblables sont enchâssées par bombardement dans des fibres thermoplastiques.

Les documents GB-2 021 552, WO 94/20654, EP-A-0 240 167, et WO 87/04144 décrivent des produits à prise hydraulique dont les fibres de renforcement sont réalisées au départ de polymère modifié. Les fibres sont donc à chaque fois modifiées dans la masse, ce qui entraîne de nombreux désavantages.

Cette incorporation d'additifs dans la masse même des fibres de polypropylène augmente les coûts de fabrication et entraîne une modification des caractéristiques mécaniques de la fibre de renforcement, notamment en diminuant sa ténacité.

Le document EP 0 310 100 décrit également des fibres de polyoléfine contenant des particules inorganiques enchâssées dans la masse de la fibre, aucune des particules n'étant exposée à la surface de la fibre. Ces fibres sont fabriquées au départ d'un film qui peut avoir subi certain traitements de surface. Les traitements de surface mentionnés consistent en des modifications chimiques, électriques ou mécaniques de la fibre. Ce document mentionne également l'application de surfactants à la surface de la fibre.
Le brevet US 4,310,478 décrit des fibres de renforcement de polyoléfines dont la surface a subi un traitement corona; un agent d'avivage hydrophilique (agent de mouillage) est ensuite appliqué sur la surface des fibres traitées par corona. Toutefois, ces fibres ne conviennent pas pour la fabrication d'articles en fibres-ciment, vu la solubilité des agents de mouillage en milieu aqueux.
Il en est de même pour les fibres polyoléfiniques divulguées dans le brevet US 4,404,314 traitées par mise en contact avec une solution aqueuse d'un polymère hydrosoluble obtenu par copolymérisation d'acrylamide et d'ester d'acrylate ou de méthacrylate.

On connaît encore des fibres de polypropylène stéréorégulier ayant une résistance à la traction élevée, (EP 0 525 737 de Daiwabo). Dans le brevet EP-A-0 537 129 sont décrits des produits manufacturés façonnés solides en ciment renforcés par ce type de fibres de polypropylène.

Un problème encore rencontré dans les produits en fibres-ciment en plaques renforcés par ce type de fibres est l'apparition de fissures dans les bords de la plaque en particulier au cours du vieillissement à long terme de ces produits.

D'autre part, le travail de rupture a une importance considérable pour l'utilisation des produits en fibres-ciment. Une valeur élevée (produit à haute ductilité) est recherchée. Une haute ductilité est, en outre, importante afin de pouvoir, le cas échéant, usiner les pièces en fibres-ciment : forer, clouer, scier, etc. Enfin, la sécurité au cours de l'utilisation des produits, tels que les toitures, s'en trouve également augmentée, car on évite ainsi des ruptures trop rapides ou trop violentes sous charge.

Dans les produits en fibres-ciment non comprimés, renforcés par des fibres de polypropylène, le travail de rupture a généralement une valeur très faible.

Au vu des raisons énumérées ci-dessus, en particulier à cause de leur faible résistance à la fissuration et de leur faible travail de rupture, l'utilisation des produits en fibres-ciment comprimés et non comprimés, dont les fibres de renforcement sont des fibres de polypropylène, est restée jusqu'à présent très limitée.

On peut noter que certaines fibres de polypropylène sont utilisées, en faible quantité, dans des produits en béton, pour réduire la fissuration du béton. On connaît par exemple une fibre commercialisée sous le nom Crackstop^{®}. Ce type de fibre a des propriétés mécaniques insuffisantes et est donc totalement inadéquat pour renforcer des produits en fibres-ciment, tels que des éléments de toiture ou de façade.

En effet, les produits en fibres-ciment sont caractérisés par un très grand rapport surface/épaisseur. Le problème de fissuration de tels produits est donc complètement différent de celui de produits massifs en béton. Dans les produits en fibres-ciment, les fibres doivent réellement remplir une fonction de renforcement, alors que dans les produits en béton, la quantité de fibres est nettement moins importante et ne remplit pas réellement cette fonction de renforcement. De plus, les proportions des différents constituants, notamment de ciment, sont très différentes dans les produits en fibres-ciment et dans les produits en béton. De même, les conditions de mises en oeuvre et les conditions d'utilisation sont tout à fait différentes.

On a maintenant découvert de façon inattendue et surprenante que des fibres de polypropylène, même ordinaire, mais ayant subi un double traitement de surface par traitement corona et par dépôt d'une dispersion aqueuse de polymères organiques comportant des groupes polaires, donnent de très bons résultats, c'est-à-dire qu'il est possible de réaliser un produit façonné en fibres-ciment présentant une bonne résistance, un travail de rupture élevé, et une bonne résistance à la fissuration, au moyen de fibres de polypropylène ayant subi ce traitement de surface.

L'invention a pour but de procurer des produits façonnés en fibres-ciment qui évitent les inconvénients propres à l'état de la technique connu.

Un des buts de l'invention est notamment de procurer un produit façonné en fibres-ciment présentant de bonnes propriétés mécaniques, tels qu'un travail de rupture élevé et une bonne résistance à la fissuration, à bas prix de revient.

La présente invention a pour objet un procédé de traitement de fibres de polypropylène pour le renforcement de produits façonnés en fibres-ciment fabriqués au moyen d'une composition à prise hydraulique comprenant notamment de l'eau, des liants hydrauliques et des fibres de renforcement. Le procédé suivant l'invention comprend un traitement de la surface des fibres par corona et un dépôt de polymère organique comportant des groupes polaires et comportant de préférence des monomères oléfiniques, ce dépôt ayant été appliqué à l'aide d'une dispersion aqueuse de ce polymère

De préférence, le traitement corona est effectué en pré-traitement immédiatement avant l'application de la dispersion aqueuse.

Dans le présent texte, on entend par dispersion aussi bien une dispersion d'un solide dans un liquide, qu'une émulsion d'un liquide dans un liquide.

Suivant un mode d'exécution, ladite dispersion aqueuse comporte, seul ou en mélange, un polymère organique choisi parmi les homopolymères et copolymères de monomères oléfiniques modifiés après synthèse (par exemple par greffage) par des groupes polaires.

Les dits groupes polaires sont choisis, par exemple, parmi l'anhydride maléique, l'acide acrylique, ou l'acide méthacrylique.

Ladite dispersion aqueuse peut aussi comporter, seul ou en mélange, un polymère organique choisi parmi les homopolymères et copolymères de monomères oléfiniques modifiés par oxydation.

Ladite dispersion peut encore comporter, seul ou en mélange, un polymère organique choisi parmi les copolymères d'un monomère oléfinique et d'un monomère polaire, tel que, par exemple, l'acide méthacrylique et l'acide acrylique, éventuellement neutralisé par des ions.

D'une manière avantageuse, les fibres de polypropylène ayant subi ledit traitement selon l'invention comprennent de 0.05 à 5% en poids et de préférence de 0.15 à 1.5 % en poids du dit dépôt de polymère organique comportant des groupes polaires, par rapport au poids de fibre.

Les fibres de polypropylène traitées selon le procédé suivant l'invention, ont, de manière préférée, un denier (d) compris entre 0.5 et 10, et de manière encore plus préférée entre 0.5 et 2.

Les fibres peuvent être coupées avantageusement en longueur pouvant aller de 2 à 20 mm; de préférence la longueur des fibres s'échelonne de 5 à 10 mm. La section des fibres peut être circulaire ou de forme irrégulière, par exemple en tonne de X ou Y. Les fibres peuvent être crêpées pendant qu'elles sont étirées ou après. La technique de crêpage des fibres peut inclure des opérations telles que la fausse torsion, le traitement d'enchevêtrement par courant d'air (comprenant le traitement TASLAN) ou le traitement par compression (à savoir à la boîte de bourrage).

Les fibres traitées selon le procédé suivant l'invention peuvent également être obtenues par fibrillation d'un film de polypropylène extrudé. Les fibres peuvent alors présenter une forme de ruban.

Les fibres de renforcement peuvent être obtenues au départ de résine de tout type de polypropylène couramment utilisé.

Les fibres de polypropylène, ou une partie des fibres de polypropylène, peuvent éventuellement comprendre des charges. Elles peuvent éventuellement comprendre, en outre, un agent d'hydrophilisation tel qu'un sel de métal alcalin d'alcoylphosphate, tel qu'un sel de sodium ou de potassium, comportant avantageusement de 8 à 18 atomes de carbone.

Suivant une variante d'exécution, les fibres traitées selon le procédé suivant l'invention, ou une partie des fibres traitées selon le procédé suivant l'invention, peuvent être constituées de polypropylène hautement cristallin ayant, par exemple, une résistance à la rupture à l'état de fibres supérieure à 490 N/mm², un rapport du poids moléculaire moyen en masse au poids moléculaire moyen en nombre (Q) < à 4,5, une teneur en constituants insolubles (HI) comprise entre 97 et 100 et une fraction de pentades isotactiques en moles (IPF) comprise entre 94 et 100.

Suivant une autre forme d'exécution de l'invention, les fibres de renforcement, ou une partie des fibres de renforcement, peuvent être des fibres de polypropylène bicomposantes, consistant, par exemple, en un noyau et une couche extérieure, dont la couche extérieure contient des particules de carbonate de métaux alcalinoterreux, tels que par exemple, le carbonate de calcium, le carbonate de magnésium ou leurs mélanges.

La présente invention a donc pour objet un procédé de traitement de surface de fibres de polypropylène pour le renforcement de produits en fibres-ciment; ce procédé comportant un traitement corona, de préférence en pré-traitement, et une immersion des fibres de polypropylène dans une dispersion aqueuse de polymères organiques comportant, de préférence, des monomères oléfiniques et comportant des groupes polaires.

D'une manière avantageuse, le traitement corona consiste à faire passer les fibres avec une vitesse de défilement comprise entre environ 10 et 300 mètres par minute et de manière préférée entre environ 30 et 150 m/min. dans une décharge électrique. En particulier, cette décharge peut être créée entre une électrode portée à haute tension (10 à 25 kVolts) et à haute fréquence (10 à 40 kHz) et un cylindre relié à la terre.

D'une manière préférée, la concentration de la dispersion aqueuse du bain de traitement est de 0.5 à 40% de polymères organiques.

D'une manière particulièrement avantageuse, ledit traitement de surface par le dépôt de polymère organique est réalisé par mise en contact des fibres avec un rouleau applicateur plongeant dans un bain de traitement comportant ladite dispersion aqueuse. Toutes autres formes de traitement peuvent être envisagées telles que les applications par trempage, par aspersion, ou par rideau.

Suivant la technique utilisée pour le traitement de surface, la concentration de la dispersion doit être ajustée. Pour des traitements par bains, la dispersion aqueuse a de préférence une concentration en polymères organiques comprise entre 0.5 et 10% en matières sèches. Pour des traitements de surface par aspersion, des concentrations préférées de la dispersion sont par exemple comprises entre 10 et 40% en matière sèche.

Le double traitement de surface suivant l'invention peut être réalisé, au choix, avant, pendant ou après l'étape d'étirage des fibres. Suivant le cas, le traitement est réalisé sur les fibres chaudes ou refroidies.

Plusieurs traitements de surface peuvent éventuellement être prévus lors de la fabrication des fibres de renforcement. Généralement, le bain de traitement peut être réglé entre 20 et 80°C.

La présente invention a aussi pour objet des produits façonnés en fibres-ciment comportant des fibres de renforcement telles que décrites ci-dessus et des fibres de renforcement traitées par le procédé décrit ci-dessus.

De manière préférée, les produits en fibres-ciment comprennent de 0.3 à 4% et de manière encore préférée de 0.5 à 2.5 % en poids par rapport au mélange sec total initial, de fibres de polypropylène suivant l'invention.

Les produits en fibres-ciment conformes à invention peuvent comprendre de surcroît des fibres inorganiques ou des fibres organiques autres que les fibres de polypropylène suivant l'invention.

Des exemples de fibres organiques pouvant être utilisées en combinaison avec des fibres de polypropylène traitées sont les fibres de polyacrylonitrile, de poly(alcool vinylique), de polyamide, de polyester, d'aramide, de carbone et de polyoléfines.

Des exemples de fibres inorganiques pouvant être utilisées en combinaison avec des fibres de polypropylène traitées sont les fibres de verre, la laine de roche, la laine de laitier, les fibres de wollastonite, les fibres de céramique et analogues.

Pour des raisons de simplicité, il est fait référence au ciment comme liant préféré dans la présente description. Toutefois, tous les autres liants à prise hydraulique peuvent être utilisés au lieu du ciment. Les liants à prise hydraulique appropriés sont à entendre comme étant des matériaux qui contiennent un ciment inorganique et/ou un liant ou adhésif inorganique qui durcit par hydratation. Des liants particulièrement appropriés qui durcissent par hydratation sont notamment, par exemple, le ciment Portland, le ciment à haute teneur en alumine, le ciment Portland de fer, le ciment de trass, le ciment de laitier, le plâtre, les silicates de calcium formés par traitement à l'autoclave et les combinaisons de liants particuliers.

Des charges et additifs les plus divers qui, par exemple, peuvent améliorer le comportement d'égouttage des suspensions sur les machines d'égouttage, sont fréquemment ajoutés aux liants. Des additifs possibles sont des matériaux tels que les cendres volantes, la silice amorphe, le quartz moulu, la roche moulue, les argiles, les laitiers de haut-fourneau, les carbonates, les pouzzolanes, etc. La quantité totale de charges est, de préférence, inférieure à 50 % en poids par rapport au poids total initial à l'état sec du produit.

Le produit suivant l'invention peut encore comporter, en outre, des fibres de mise en oeuvre de préférence, en une quantité égale ou inférieure à 10 % en poids par rapport au poids total initial à l'état sec du produit.

Le produit suivant l'invention peut, par exemple, être un élément de toiture ou de façade, telle qu'une plaque plane, une plaque ondulée, ou tous autres éléments accessoires de formes diverses.

L'invention est décrite ci-après de façon plus détaillée à l'aide d'exemples particuliers de réalisation.

### EXEMPLES

Dans les exemples suivants, des produits en fibres-ciment comprimés (exemple 1) ou non comprimés (exemple 2), renforcés par des fibres de polypropylène traitées suivant l'invention, sont comparés à des produits en fibres-ciment réalisés avec
a) les mêmes fibres de polypropylène non traitées,
b) les mêmes fibres ayant subi uniquement un traitement corona
c) les mêmes fibres ayant subi uniquement un traitement dans un bain d'émulsion.

Bain de traitement utilisé :
Bain (1) : Composition MICHEM^{®}emulsion 94340-E de Michelman Int'l & Co., diluée avec de l'eau, jusqu'à une concentration de 4% de matières sèches.
   Celle-ci est une dispersion aqueuse comportant du polypropylène greffé à l'anhydride maléique du type Epolene^{®} E-43 de Eastman Chemical. La dispersion a les caractéristiques suivantes :
   agents émulsifiants : non ioniques
   taille moyenne des particules : 40 nm
   pH : 7.5 - 9.0

   D'autres bains pourraient être utilisés tels que par exemple:
Bain 2) : composition n° M 59840 de Michelman Int'l & Co., diluée avec de l'eau jusqu'à une concentration de 4% de matières sèches, à laquelle à été ajouté 0.1 % de surfactant du type Silwet^{®} L-77 de OSI Specialities.
   La composition n° M 59840 est une dispersion aqueuse comportant un copolymère d'éthylène-propylène greffé à l'anhydride maléique du type A-C^{®} X 597 de Allied Signal.
Bain 3) : composition n° M 93935 de Michelman Int'l & Co., diluée avec de l'eau jusqu'à une concentration de 4% de matières sèches, à laquelle à été ajouté 0.1 % de surfactant du type Silwet^{®} L-77 de OSI Specialities.
   La composition M 93935 est une dispersion aqueuse comportant un polyéthylène haute densité (HDPE) oxydé du type AC^{®} 392 HDPE de Allied Signal. La dispersion a les caractéristiques suivantes :
   agents émulsifiants : non ioniques
   taille moyenne des particules : 40 nm -
   pH : 9.0 - 10.5
Bain 4) : Composition Aquacer 524 de Byk-Cera, diluée avec de l'eau jusqu'à une concentration de 4% de matières sèches.
   Celle-ci est une dispersion aqueuse comportant du polypropylène greffé à l'anhydride maléique du type Epolene^{®} E-43 de Eastman Chemical. La dispersion comporte des agents émulsifiants anioniques.
Bain 5) : composition Aquacer 841 de Byk-Cera, diluée avec de l'eau jusqu'à une concentration de 4% de matières sèches.
   Celle-ci est une dispersion aqueuse comportant du polypropylène greffé à l'anhydride maléique du type Epolene^{®} E-43 de Eastman Chemical. La dispersion comporte des agents émulsifiants cationiques.
Bain 6) : Composition Aquaseal^{®} 1127 de Paramelt B.V., diluée jusqu'à une concentration en matières sèches de 4%.
   Cette composition est une dispersion aqueuse d'un copolymère d'éthylène et d'acide méthacrylique.
Bain 7) : Composition Aquaseal^{®} 1088 de Paramelt B.V., diluée jusqu'à une concentration en matières sèches de 4%.
   Cette composition est une dispersion aqueuse d'un copolymère d'éthylène et d'acide méthacrylique neutralisé par les ions Na⁺ (ionomère).
Bain 8) : composition Nuwet^{®} 500 de OSI Specialities, Inc., à une concentration de 15g/l de solution. Cette composition comporte au minimum 65% de polydiméthylsiloxane organique modifié, au maximum 20% d'oxide de polyalkylène et au maximum 20% d'alkyle éthoxylé.
Bain 9) : mélange de 0,35% de la composition Silastol^{®} cut 5A (ester de polyglycole d'acide gras) à une concentration de 15g/l et de 0,15% de la composition Silastol^{®} cut 5B (mélange de phosphates d'alcool gras) à une concentration de 4g/l, toutes deux de la société Schill and Seilacher.

### Préparation des fibres de polypropylène

Des granulés de résine de polypropylène standard (point de fusion 165 °C, indice de fluidité ou "melt flow index" (MFI) de 25) sont chauffés dans une extrudeuse (la température en bout d'extrudeuse variant entre 240 °C et 280 °C) et filées de manière classique.

Les fibres sont alors étirées avec des équipements classiques.

Suivant un premier procédé de préparation, le filage et l'étirage des fibres sont réalisés de manière discontinue. Suivant un autre procédé de préparation, le filage et l'étirage sont réalisés de manière continue.

Les fibres ont alors les caractéristiques suivantes :
titre : 1.18 dtex
ténacité : 730 N/mm²
module initial : 7460 N/mm²
élongation à la rupture : 19.0 %

Après étirage, les fibres passent en continu dans un arc électrique créé par une machine corona du type Ahlbrandt^{®} type TG100 avec les paramètres de réglage suivants :
vitesse de défilement des fibres : 50m/min.
puissance : 0,8 kWatt
tension : 14 kVolts
distance entre les électrodes : 1,2 mm.

Les fibres sont ensuite imprégnées du bain de traitement (1) décrit ci-dessus par contact avec un rouleau applicateur plongeant dans ce bain de traitement. Les fibres passent ensuite entre des rouleaux qui expriment l'excédent de dispersion. La quantité de matière sèche du bain de traitement appliquée sur les fibres par ce traitement est d'environ 0.15% à 1.5% en poids par rapport au poids de fibre.

Cette concentration est mesurée par résonance magnétique nucléaire (RMN) à l'aide d'un appareil commercial OXFORD NMR QP 20+. Cet équipement est utilisé de manière standard pour quantifier les finitions de surfaces appliquées sur les fibres, notamment dans la technologie textile. Cet appareil est conçu pour déterminer la concentration d'un composant déterminé, qui contient des protons dans sa structure moléculaire.

Les fibres sont ensuite coupées de manière classique à une longueur d'environ 6 mm avant d'être utilisées dans les mélanges de matériaux de construction.

### EXEMPLE 1

Dans cet exemple, le traitement corona et l'imprégnation avec le bain d'émulsion sont réalisés après l'étirage des fibres, mais il est également possible de réaliser ces traitements pendant l'étape d'étirage ou directement après le filage, avant étirage.

Préparation des mélanges et mise en oeuvre sur machine Hatschek.

Les composés suivants sont mélangés dans de l'eau:
77.2 % de ciment,
1.8 % de fibres de polypropylène,
3.0 % de pâte de cellulose Kraft raffinée jusqu'à 65°SR (Schopper-Riegler),
3.0 % de silice amorphe, et
15% de cendres volantes.

Les concentrations données sont les concentrations en solides par rapport à la matière sèche totale.

On dilue cette suspension avec de l'eau jusqu'à une concentration de 30 g par litre et on la transfère ensuite au cuvier d'une machine Hatschek.

Peu avant l'introduction de la suspension dans le cuvier, on ajoute 200 ppm d'un agent de floculation de type polyacrylamide pour améliorer la rétention du ciment.

On produit des plaques à l'aide de la machine par 22 tours du cylindre de formage.

Les plaques sont ensuite pressées entre des moules en acier huilé dans une presse sous une pression spécifique appliquée de 180 bars (17.7 MPa), jusqu'à une épaisseur moyenne de 5.5 mm.

On fait durcir les feuilles sous couverture de matière plastique pendant 14 jours dans une humidité relative de 100% à 20°C.

### Essais mécaniques de résistance à la flexion et à la fissuration

On exécute les essais mécaniques sur des plaques humides c'est-à-dire après immersion pendant 3 jours dans de l'eau. On détermine tout d'abord la résistance en flexion des échantillons sur une machine d'essai mécanique au cours d'un essai classique de flexion sur trois points.

L'appareil enregistre la courbe contrainte-déformation. Le travail de rupture sous charge maximum (IMOR) exprimé en joules par m² (J/m²) est l'intégrale de la fonction contrainte-déformation jusqu'à la charge de rupture. Les résultats sont présentés dans le tableau I ci-dessous.

On détermine également la résistance à la fissuration par un test de vieillissement (en alternance chaleur-eau) inspiré de la norme EN 492 mais rendu plus sévère.

A cet effet, une série de plaques en fibres-ciment fabriquées sur une machine Hatschek, comprimées et laissées à durcir sous atmosphère humide pendant 14 jours comme décrit ci-dessus sont découpées en carrés de 40 cm * 27 cm. Une toiture est montée à l'aide de 9 plaques, de manière classique, c'est-à-dire partiellement superposées.

Le test consiste à soumettre cette toiture à 30 cycles de 6 heures comprenant
2h55 de chaleur (70°C +/-5°C),
5 min. d'arrêt,
2h55 d'arrosage avec une eau à température ambiante (2,5 1/m².min),
5 min. d'arrêt.

Les ardoises sont alors démontées, empilées et exposées pendant 24 heures à une atmosphère de 100 % en CO₂. Les ardoises sont ensuite remontées en toiture et soumises à une nouvelle série de 30 cycles chaleur-eau de 6 heures comme décrits ci-dessus.

Les fissures apparaissant sur la face exposée (non superposée) des ardoises sont alors mesurées et additionnées pour les 9 plaques.

Les résultats sont donnés au tableau I ci-après.

**TABLEAU I**

| Traitements | Résistance MOR (MPa) | Travail de rupture (IMOR) (J/m²) | Longueur totale des fissures pour 9 plaques (cm) |
|---|---|---|---|
| aucun | 20.4 | 5510 | 58 |
| corona uniquement | 19.4 | 5550 | 55 |
| bain 1 uniquement | 20.7 | 6020 | 47 |
| corona et bain 1 | 21.8 | 6530 | 15 |

### EXEMPLE 2

Préparation des mélanges et mise en oeuvre sur machine Hatschek.

Le même procédé de préparation que celui décrit pour l'exemple 1 est utilisé ici, mis à part le fait que les produits ne sont pas comprimés.

Les plaques produites à l'aide de la machine Hatschek sont donc directement mises à durcir sans étape de pressage intermédiaire.

Les tests mécaniques sont effectués sur des plaques à l'état sec, à l'air.

Les résultats sont rassemblés dans le tableau II ci-dessous.

**TABLEAU II**

| | Résistance MOR | | |
|---|---|---|---|
| Traitements | (MPa) | Travail de rupture (IMOR) (J/m²) | Longueur totale des fissures pour 9 plaques (cm) |
| aucun | 16.3 | 380 | 65 |
| corona uniquement | 16.4 | 392 | 63 |
| bain 1 uniquement | 17.1 | 1220 | 50 |
| corona et bain 1 | 18.3 | 1830 | 21 |

Pour les produits en fibres-ciment comprimés (exemple 1) comme pour les produits non comprimés (exemple 2), on peut déduire des tableaux I et II ci-dessus, que le traitement de surface des fibres de polypropylène ordinaire à l'aide du bain de polymère organique, procure au produit fini une augmentation de la résistance et surtout du travail de rupture par rapport au produit dont les fibres n'ont pas subi de traitement.

Pour les produits dont les fibres ont subi un traitement double (corona + bain), l'amélioration du travail de rupture est encore nettement plus importante. Ceci est particulièrement surprenant puisque le traitement corona en lui même n'a pas montré d'amélioration significative.

De même, les valeurs mesurées de longueur totale des fissures pour les produits en fibres-ciment comprimés ou non comprimés dont les fibres ont subi le traitement par bain seul montrent une diminution des fissures par rapport au produit dont les fibres n'ont pas été traitées. L'amélioration de la résistance à la fissuration est par contre très marquée pour les produits dont les fibres ont subi le double traitement. Ce résultat est également très surprenant car le traitement corona seul n'a pas apporté d'amélioration significative de la résistance à la fissuration non plus.

L'invention permet donc avec un traitement de surface, simple et peu coûteux, des fibres de polypropylène, d'augmenter la résistance, le travail de rupture et d'améliorer la résistance à la fissuration des produits en fibres-ciment renforcés par ces fibres. Ce traitement peut être appliqué à tout type de fibre de polypropylène.

Les effets de ce traitement sont particulièrement inattendus. Malgré le très court temps de contact des fibres avec la composition du bain de traitement, l'adhésion des particules sur la fibre semble être importante. Ces effets sont d'autant plus inattendus que, malgré le mélange des fibres et du ciment dans une grande quantité d'eau et sous agitation importante, lors de la fabrication des produits en fibres-ciment, l'effet du traitement des fibres est conservé.

## Revendications

1. Procédé de traitement de fibres de polypropylène pour le renforcement de produits en fibres-ciment, comportant les étapes
a) de traitement de la surface des fibres par corona; et
b) de traitement de la surface des fibres au moyen d'un dépôt de polymère organique comportant des groupes polaires, ce dépôt étant appliqué à l'aide d'une dispersion aqueuse de ce polymère.

2. Procédé suivant la revendication 1, **caractérisé en ce que** ledit polymère organique comporte des monomères oléfiniques.

3. Procédé suivant l'une quelconque des revendications précédentes, **caractérisé en ce que** ledit polymère organique est choisi parmi les homopolymères et copolymères de monomères oléfiniques modifiés après synthèse par des groupes polaires.

4. Procédé suivant l'une quelconque des revendications précédentes, **caractérisé en ce que** lesdits groupes polaires sont choisis parmi l'anhydride maléique, l'acide acrylique, ou l'acide méthacrylique.

5. Procédé suivant l'une quelconque des revendications précédentes, **caractérisé en ce que** ledit polymère organique est choisi parmi les homopolymères et copolymères de monomères oléfiniques modifiés par oxydation.

6. Procédé suivant l'une quelconque des revendications précédentes, **caractérisé en ce que** ledit polymère organique est choisi parmi les copolymères d'un monomère oléfinique et d'un monomère polaire, éventuellement neutralisé par des ions.

7. Procédé suivant l'une quelconque des revendications précédentes, **caractérisé en ce que** le denier (d) de la fibre est compris entre 0.5 et 10.

8. Procédé suivant l'une quelconque des revendications précédentes, **caractérisé en ce que** la longueur de la fibre est comprise entre 2 et 20 mm.

9. Procédé suivant l'une quelconque des revendications précédentes, **caractérisé en ce que** ledit dépôt représente de 0.05 à 5 % en poids de matière sèche par rapport à la matière sèche de la fibre.

10. Procédé suivant l'une quelconque des revendications précédentes, **caractérisé en ce que** le traitement corona et le traitement à l'aide d'une dispersion aqueuse sont réalisés après étirage des filaments de polypropylène.

11. Procédé suivant l'une quelconque des revendications précédentes, **caractérisé en ce que** le traitement corona consiste à faire passer les fibres dans une décharge électrique.

12. Procédé suivant la revendication précédente, **caractérisé en ce que** ladite dispersion aqueuse comporte de 0.5 à 40 % de polymères organiques.

13. Produit façonné en fibres-ciment fabriqué au moyen d'une composition à prise hydraulique comprenant de l'eau, des liants hydrauliques et des fibres de renforcement traitées selon l'une quelconque des revendications 1 à 9.

14. Produit façonné en fibres-ciment fabriqué au moyen d'une composition à prise hydraulique comprenant de l'eau, des liants hydrauliques et des fibres de renforcement traitées avec le procédé de traitement suivant l'une quelconque des revendications 10 à 13.

15. Produit suivant l'une quelconque des revendications 13 ou 14, **caractérisé en ce qu'**il comprend de 1 à 5% en poids par rapport au mélange sec total initial, de fibres de renforcement.

16. Produit suivant l'une quelconque des revendications 13 à 15, **caractérisé en ce qu'**il consiste en une plaque ondulée ou plane.

## Claims

1. Method for treating polypropylene fibres for reinforcing fibre cement products, comprising the steps of
a) treating the surface of the fibres by corona; and
b) treating the surface of the fibres by means of an organic polymer deposit comprising polar groups, this deposit being applied by means of an aqueous dispersion of this polymer.

2. Method according to claim 1, **characterised in that** said organic polymer comprises olefin monomers.

3. Method according to any one of the preceding claims, **characterised in that** said organic polymer is chosen from the homopolymers and copolymers of olefin monomers modified after synthesis by polar groups.

4. Method according to any one of the preceding claims, **characterised in that** said polar groups are chosen from maleic anhydride, acrylic acid or methacrylic acid.

5. Method according to any one of the preceding claims, **characterised in that** said organic polymer is chosen from the homopolymers and copolymers of olefin monomers modified by oxidation.

6. Method according to any one of the preceding claims, **characterised in that** said organic polymer is chosen from the copolymers of an olefin monomer and a polar monomer, optionally neutralised by ions.

7. Method according to any one of the preceding claims, **characterised in that** the denier (d) of the fibre is between 0.2 and 10.

8. Method according to any one of the preceding claims, **characterised in that** the length of the fibre is between 2 and 20 mm.

9. Method according to any one of the preceding claims, **characterised in that** said deposit represents 0.05 to 5% by weight of dry matter with respect to the dry matter of the fibre.

10. Method according to any one of the preceding claims, **characterised in that** the corona treatment and the treatment by means of an aqueous dispersion are carried out after the drawing of the polypropylene fibres.

11. Method according to any one of the preceding claims, **characterised in that** the corona treatment consists of passing the fibres through an electrical discharge.

12. Method according to the preceding claim, **characterised in that** said aqueous dispersion comprises 0.5 to 40% organic polymers.

13. Shaped cement fibre product manufactured by means of a hydraulic-setting composition comprising water, hydraulic binders and reinforcing fibres treated according to any one of claims 1 to 9.

14. Shaped fibre cement product manufactured by means of a hydraulic-setting composition comprising water, hydraulic binders and reinforcing fibres treated with the treatment method according to any one of claims 10 to 13.

15. Product according to either one of claims 13 or 14, **characterised in that** it comprises 1 to 5% by weight with respect to the initial total dry mixture of reinforcing fibres.

16. Product according to any one of claims 13 to 15, **characterised in that** it consists of a corrugated or flat sheet.

## Patentansprüche

1. Verfahren zur Behandlung von Polypropylenfasern für die Verstärkung von Produkten aus Faserzement, umfassend die Schritte:
a) der Behandlung der Oberfläche der Fasern durch Korona; und
b) der Behandlung der Oberfläche der Fasern mit Hilfe einer organischen Polymerschicht, umfassend polare Gruppen, wobei diese Schicht mit Hilfe einer wässrigen Dispersion dieses Polymers aufgetragen wird.

2. Verfahren nach Anspruch 1, **dadurch gekennzeichnet, dass** das organische Polymer olefinische Monomere umfasst.

3. Verfahren nach einem der vorhergehenden Ansprüche, **dadurch gekennzeichnet, dass** das organische Polymer unter den Homopolymeren und Copolymeren von olefinischen Monomeren, modifiziert nach der Synthese durch polare Gruppen, gewählt wird.

4. Verfahren nach einem der vorhergehenden Ansprüche, **dadurch gekennzeichnet, dass** die polaren Gruppen unter dem Maleinsäureanhydrid, der Acrylsäure oder Methacrylsäure ausgewählt werden.

5. Verfahren nach einem der vorhergehenden Ansprüche, **dadurch gekennzeichnet, dass** das organische Polymer unter den Homopolymeren und Copolymeren von olefinischen Monomeren, modifiziert durch Oxydation, gewählt wird.

6. Verfahren nach einem der vorhergehenden Ansprüche, **dadurch gekennzeichnet, dass** das organische Polymer unter den Copolymeren eines olefinischen Monomers und eines polaren Monomers, eventuell durch Ionen neutralisiert, gewählt wird.

7. Verfahren nach einem der vorhergehenden Ansprüche, **dadurch gekennzeichnet, dass** der Denier (d) der Faser zwischen 0,5 und 10 liegt.

8. Verfahren nach einem der vorhergehenden Ansprüche, **dadurch gekennzeichnet, dass** die Länge der Faser zwischen 2 und 20 mm liegt.

9. Verfahren nach einem der vorhergehenden Ansprüche, **dadurch gekennzeichnet, dass** die Schicht zwischen 0,05 und 5 Gew.-% Trockenmasse bezüglich der Trockenmasse der Faser darstellt.

10. Verfahren nach einem der vorhergehenden Ansprüche, **dadurch gekennzeichnet, dass** die Koronabehandlung und die Behandlung mit Hilfe einer wässrigen Dispersion nach dem Strecken der Polypropylenfäden durchgeführt wird.

11. Verfahren nach einem der vorhergehenden Ansprüche, **dadurch gekennzeichnet, dass** die Koronabehandlung darin besteht, die Fasern in eine elektrische Entladung zu überführen.

12. Verfahren nach dem vorhergehenden Anspruch, **dadurch gekennzeichnet, dass** die wässrige Dispersion zwischen 0,5 und 40 % organische Polymere umfasst.

13. Produkt, geformt aus Faserzement, hergestellt mit Hilfe einer Zusammensetzung mit hydraulischem Abbinder, umfassend Wasser, hydraulische Bindemittel und Verstärkungsfasern, behandelt nach einem der Ansprüche 1 bis 9

14. Produkt, geformt aus Faserzement, hergestellt mit Hilfe einer Zusammensetzung mit hydraulischem Abbinder, umfassend Wasser, hydraulische Bindemittel und Verstärkungsfasern, behandelt mit dem Behandlungsverfahren nach einem der Ansprüche 10 bis 13.

15. Verfahren nach einem der Ansprüche 13 oder 14, **dadurch gekennzeichnet, dass** es 1 bis 5 Gew.-% Verstärkungsfasern bezüglich der anfänglichen Gesamttrockenmischung umfasst.

16. Produkt nach einem der Ansprüche 13 bis 15, **dadurch gekennzeichnet, dass** es eine gewellte oder ebene Platte umfasst.
